(19) **Europäisches Patentamt**

**European Patent Office**

**Office européen des brevets**

(11) **EP 0 715 951 B1**

(12) **EUROPÄISCHE PATENTSCHRIFT**

(45) Veröffentlichungstag und Bekanntmachung des Hinweises auf die Patenterteilung:
**18.02.2004 Patentblatt 2004/08**

(51) Int Cl.$^7$: **B32B 27/32**

(21) Anmeldenummer: **95118507.3**

(22) Anmeldetag: **24.11.1995**

(54) **Siegelbare, weiss-opake, biaxial orientierte Polypropylen-Mehrschichtfolie, Verfahren zu ihrer Herstellung und ihre Verwendung**

Sealable, white opaque, biaxially oriented polypropylene multilayer film, method for its manufacture and its use

Feuille multicouche scellable, opaque-blanche, orientée biaxialement en polypropylène, procédé pour sa fabrication et son utilisation

(84) Benannte Vertragsstaaten:
**BE DE ES FR GB IT NL**

(30) Priorität: **07.12.1994 DE 4443411**

(43) Veröffentlichungstag der Anmeldung:
**12.06.1996 Patentblatt 1996/24**

(73) Patentinhaber: **Trespaphan GmbH**
**66539 Neunkirchen (DE)**

(72) Erfinder:
• **Mauer, Rudolf**
**D-55130 Mainz (DE)**

• **Wilhelm, Adolf**
**D-65199 Wiesbaden (DE)**
• **Schreck, Michael, Dr.**
**D-60529 Frankfurt (DE)**

(74) Vertreter: **Luderschmidt, Schüler & Partner GbR**
**Patentanwälte,**
**Postfach 3929**
**65029 Wiesbaden (DE)**

(56) Entgegenhaltungen:
**EP-A- 0 180 087**     **EP-A- 0 514 098**
**EP-A- 0 562 867**     **EP-A- 0 695 778**

**Beschreibung**

Die Erfindung betrifft eine siegelbare, weiß-opake, biaxial orientierte Polypropylen-Mehrschichtfolie aus einer Kernschicht und mindestens einer darauf angeordneten Zwischenschicht und mindestens einer auf der Zwischenschicht angeordneten Deckschicht.

Die Erfindung betrifft ferner ein Verfahren zur Herstellung der Mehrschichtfolie sowie ihre Verwendung.

Opake Folien sind allgemein bekannt. So wird beispielsweise in der EP-A-0 180 087 eine fünfschichtige siegelfähige Folie beschrieben, die eine vakuolenhaltige Basisschicht, hergestellt aus Propylenhomopolymer und Calciumcarbonat, aufweist, eine Zwischenschicht aus Propylenhomopolymer und Kohlenwasserstoffharz hat und deren siegelfähige Deckschichten aus Propylen/Ethylen-Copolymeren bestehen.

Bedingt durch die dicke Zwischenschicht aus Polypropylen und Kohlenwasserstoffharz weist die Folie bessere mechanische Eigenschaften sowie einen höheren Glanz auf als Folien nach dem Stand der Technik. Daneben ist die Folie infolge der aufgeprägten Siegelschichten aus Propylen/Ethylen-Copolymeren gut coronabehandelbar. Verbesserungswürdig ist die Folie im Weißgrad bzw. in der Opazität sowie bezüglich ihrer Steifigkeit und ihrer Spleißneigung.

Aus der EP-A-0 312 226 ist eine mehrschichtige opake Folie bekannt, bei der eine Deckschicht aus einem gut bedruckbaren Polymer besteht, die eine Zwischenschicht aus Propylenhomopolmeren aufweist und eine Kernschicht hat, die vakuolenhaltig ist. Bedingt durch die angegebenen Schichtdickenverhältnisse ist - ähnlich wie in EP-A-0 180 087 - die Opazität bzw. der Weißgrad verbesserungswürdig.

In der EP-A-0 408 971 wird eine Folie mit hohem Weißgrad und hoher Opazität beschrieben, die gut bedruckbar ist. Die Folie kann eine wolkige Struktur aufweisen, die wahrscheinlich von der kleinen Korngröße des verwendeten Calciumcarbonats herrührt. Die bevorzugt angegebene Teilchengröße von 1,0 µm hat eine schlechte Dispergierbarkeit im Polymeren zur Folge. Außerdem führt der erhöhte Feinanteil der Körner zu einer verringerten Opazität, da hierdurch keine Vakuolen entstehen.

EP 0 562 867 offenbart eine siegelbar, weiss-opake, biaxial orientierte Polypropylen-Mehrschichtfolie bestehend aus einer Kern-, Zwischen- und Dechschicht. Die Kernschicht enthält 1-10, die Zwischenschicht 5-25 Gew.% vakuoleniniziierende Teilchen. Beide Schichten enthalten zudem bis zu 10 Gew.% Pigmente.

Allen vorstehend angegebenen bekannten opaken Folien haftet insbesondere der Nachteil an, daß sie entweder eine hinreichend niedrige Dichte, aber dann einen zu geringen Weißgrad haben, oder der Weißgrad ist ausreichend, aber dann ist die Dichte der Folie durch den $TiO_2$-Zusatz zu stark erhöht. Solche Folien, die hinsichtlich ihrer Dichte und hinsichtlich ihres Weißgrades optimiert sind, beispielsweise durch eine $TiO_2$ haltige Zwischenschicht auf einer vakuolenhaltigen Basisschicht, haben eine stark erhöhte Spleißneigung. Somit sind alle bekannten opaken Folien mangelhaft bezüglich der geforderten Eigenschaftskombination, d. h. hoher Weißgrad und niedrige Dichte und geringe Spleißneigung.

Die Aufgabe der vorliegenden Erfindung bestand darin, die Nachteile der im Stand der Technik vorbeschriebenen Folien zu vermeiden. Insbesondere soll eine Mehrschichtfolie zur Verfügung gestellt werden, die gleichzeitig ein niedriges Flächengewicht bei großer Foliendicke, d. h. eine möglichst niedrige Foliendichte, und einen hohen Weißgrad und eine niedrige Spleißneigung aufweist. Eine geringe Spleißneigung ist insbesondere für solche Verpakkungsanwendungen der Folie wichtig, bei denen die Verpackung in ihrer Siegelnaht kontrolliert, d. h. ohne Spleißen und ohne Einreißen geöffnet werden soll. Ein geringes Flächengewicht macht die Folie für den Anwender preiswerter,

Die Zwischenschicht enthält einen relativ hohen Anteil an vakuoleniniziieren den Teilchen mit dem Ziel die Delaminierungs tendenz der Folie zu erhöhen um so einen Missbranch anzuzeigen (tamper evident). und bei niedrigerer Dichte kann eine höhere Flächenausbeute erzielt werden, oder die Foliendicke kann erhöht werden, um die Steifigkeit der Folie zu erhöhen.

Erfindungsgemäß wird diese Aufgabe gelöst durch eine Mehrschichtfolie der eingangs genannten Gattung, deren kennzeichnende Merkmale darin bestehen, daß die Kernschicht 1 bis 15 Gew.-% vakuoleniniziierende Teilchen, bezogen auf das Gewicht der Basisschicht, enthält und die Zwischenschicht 1 bis 12 Gew.-% vakuoleniniziierende Teilchen und mindestens 2 Gew.-% Pigmente, jeweils bezogen auf das Gewicht der Zwischenschicht, enthäft.

Die erfindungsgemäße Folie zeichnet sich durch eine spezielle Rezepturierung von Zwischenschicht und Basisschicht aus, durch welche beide Schichten unterschiedliche Strukturen haben. Dadurch erzielt man eine Kombination von Folieneigenschaften, die bisher nicht nebeneinander und gleichzeitig an einer Folie realisiert werden konnte. Die Folie hat gleichzeitig einen hohen Weißgrad, eine geringe Spleißneigung und bei geringem Flächengewicht ein optimiertes Steifigkeitsniveau.

Darüber hinaus bietet die Folie alle wichtigen Eigenschaften, die für Verpakkungsfolien gefordert werden wie besonders gute, gleichmäßige, optische Eigenschaften, insbesondere einen hohen Weißgrad und optimierte mechanische Eigenschaften und eine geringe Dichte.

Die erfindungsgemäße Folie ist mindestens dreischichtig und umfaßt als wesentliche Schichten immer die Kernschicht K und zumindest eine Zwischenschicht Z und zumindest eine Deckschicht D gemäß einem Aufbau KZD. Die Wahl der Anzahl der Schichten hängt in erster Linie von dem vorgesehenen Einsatzzweck ab, wobei vier- und fünfschichtige Ausführungsformen mit beidseitigen Deckschichten besonders bevorzugt sind entsprechend einem Aufbau DKZD oder einem symmetrischen Aufbau DZKZD. Die Basisschicht (auch Kernschicht genannt) ist im Sinne der vorliegenden Erfindung diejenige Schicht, welche mehr als 50 % der Gesamtfoliendicke ausmacht. Eine Deckschicht ist die Schicht, welche eine äußerste Schicht der Folie bildet.

Die Gesamtdicke der Folie kann innerhalb weiter Grenzen variieren und richtet sich nach dem beabsichtigten Verwendungszweck. Die bevorzugten Ausführungsformen der erfindungsgemäßen Folie haben Gesamtdicken von 10 bis 140 μm, wobei 20 bis 120 μm, insbesondere 30 bis 100 μm, bevorzugt sind.

Die Dicke der Zwischenschicht/en beträgt im allgemeinen jeweils unabhängig voneinander 2 bis 20 μm, wobei Zwischenschichtdicken von 3 bis 15 μm, insbesondere 3 bis 12 μm, bevorzugt sind. Die angegebenen Werte beziehen sich jeweils auf eine Zwischenschicht.

Die Deckschicht/en weist/weisen im allgemeinen eine Dicke von 0,3 bis 5 μm, vorzugsweise 0,4 bis 3 μm, auf. Besonders vorteilhaft sind Deckschichtdicken im Bereich von 0,5 bis 1,5 μm, wobei die Dicken beidseitig vorhandener Deckschichten jeweils unabhängig voneinander gewählt werden.

Die Dicke der Kernschicht ergibt sich entsprechend aus der Differenz von Gesamtdicke und der Dicke der aufgebrachten Deck- und Zwischenschicht/en. Sie kann daher analog der Gesamtdicke innerhalb weiter Grenzen variieren und beträgt mindestens 50 % der Gesamtfoliendicke.

Die erfindungsgemäße Folie hat eine Dichte im Bereich von 0,5 bis 0,84 g/cm$^3$, vorzugsweise 0,55 bis 0,75 g/cm$^3$, insbesondere 0,6 bis 0,7 g/cm$^3$. Die Zwischenschicht und die Basisschicht haben eine unterschiedliche Dichte. Die Dichte der Zwischenschicht liegt mindestens 0,05 g/cm$^3$, bevorzugt mehr als 0,07 g/cm$^3$, insbesondere mehr als 0,1 g/cm$^3$ über der Dichte der Basisschicht, wobei die Zwischenschicht eine maximale Dichte von 0,89 g/cm$^3$ nicht überschreitet. Entsprechend ergibt sich die Dichte der Basisschicht aus Dicke und Dichte der Folie, der Zwischenschicht/en und der Deckschicht/en.

Die Basisschicht der erfindungsgemäßen Mehrschichtfolie enthält im wesentlichen ein Propylenpolymer oder eine Polypropylenmischung und vakuoleniniziierende Füllstoffe und gegebenenfalls Additive in jeweils wirksamen Mengen. Im allgemeinen enthält die Basisschicht 70 bis 99 Gew.-%, vorzugsweise 85 bis 95 Gew.-%, insbesondere 90 bis 94 Gew.-%, Propylenpolymer, jeweils bezogen auf das Gewicht der Basisschicht.

Im allgemeinen enthält das Propylenpolymere der Basisschicht zum überwiegenden Teil (mindestens 90 %) Propyleneinheiten und besitzt im allgemeinen einen Schmelzpunkt von 140 °C oder höher, vorzugsweise 150 bis 170 °C. Isotaktisches Homopolypropylen mit einem n-heptanlöslichen Anteil von 6 Gew.-% und weniger, bezogen auf das isotaktische Homopolypropylen, Copolymere von Ethylen und Propylen mit einem Ethylengehalt von 10 Gew.-% oder weniger, Copolymere von Propylen mit C$_4$-C$_8$-α-Olefinen mit einem α-Olefingehalt von 10 Gew.-% oder weniger stellen bevorzugte Propylenpolymere für die Basisschicht dar, wobei isotaktisches Homopolypropylen besonders bevorzugt ist. Die angegebenen Gewichtsprozente beziehen sich auf das jeweilige Copolymer. Das Propylenpolymere der Kernschicht hat im allgemeinen einen Schmelzflußindex von 0,5 g/10 min bis 8 g/10 min, vorzugsweise 2 g/10 min bis 5 g/10 min, bei 230 °C und einer Kraft von 21,6 N (DIN 53 735).

Des weiteren ist eine Mischung aus den genannten Propylenhomo- und/oder -copolymeren und anderen mit den Propylenpolymeren verträglichen Polyolefinen, insbesondere mit 2 bis 6 C-Atomen, geeignet, wobei die Mischung mindestens 50 Gew.-%, insbesondere mindestens 75 Gew.-%, Propylenpolymerisat enthält. Geeignete andere Polyolefine in der Polymermischung sind verträgliche Polyethylene, insbesondere HDPE, LDPE und LLDPE, wobei der Anteil dieser Polyolefine jeweils 15 Gew.-%, bezogen auf die Polymermischung, nicht übersteigt. Verträglich im Sinne der vorliegenden Erfindung bedeutet, daß das verträgliche Polymere in der Folie nicht als separate Phase vorliegt.

Gegebenenfalls kann das in der Basisschicht eingesetzte Propylenpolymere durch den Zusatz von organischen Peroxiden teilabgebaut werden. Ein Maß für den Grad des Abbaus des Polymeren ist der sogenannte Abbaufaktor A, welcher die relative Änderung des Schmelzflußindex nach DIN 53 735 des Polypropylens, bezogen auf das Ausgangspolymere, angibt.

$$A = \frac{MFI_2}{MFI_1}$$

MFI$_1$ =    Schmelzflußindex des Propylenpolymeren vor dem Zusatz des organischen Peroxids
MFI$_2$ =    Schmelzflußindex des peroxidisch abgebauten Propylenpolymeren

Im allgemeinen liegt der Abbaufaktor A des eingesetzten Propylenpolymeren in einem Bereich von 3 bis 15, vorzugsweise 6 bis 10.

Als organische Peroxide sind Dialkylperoxide besonders bevorzugt, wobei unter einem Alkylrest die üblichen gesättigten geradkettigen oder verzweigten niederen Alkylreste mit bis zu sechs Kohlenstoffatomen verstanden werden. Insbesondere sind 2,5-Dimethyl-2,5-di(t-butylperoxy)-hexan oder Di-tbutylperoxid bevorzugt.

Die Polypropylen-Basisschicht enthält vakuoleniniziierende Füllstoffe in einer Menge von 1 bis 30 Gew.-%, vorzugsweise 5 bis 15 Gew.-%, insbesondere 6 bis 10 Gew.-%, bezogen auf die Schicht.

Von dem Begriff "vakuoleniniziierende Füllstoffe" werden im Sinne der vorliegenden Erfindung vakuoleniniziierende feste Teilchen umfaßt, die im folgenden "feste Teilchen" genannt werden. Feste Teilchen sind mit der Polymermatrix unverträglich und führen beim Verstrecken der Folien zur Bildung von vakuolenartigen Hohlräumen, wobei Größe, Art und Anzahl der Vakuolen von der Größe der festen Teilchen und den Streckbedingungen wie Streckverhältnis und Strecktemperatur abhängig sind. Die Vakuolen geben den Folien ein charakteristisches perlmuttartiges, opakes Aussehen, welches durch Lichtstreuung an den Grenzflächen "Vakuole/Polymermatrix" entsteht. Die Lichtstreuung an den festen Teilchen selbst trägt zur Opazität der Folie im allgemeinen vergleichsweise wenig bei. "Opake Folie" bedeutet im Sinne der vorliegenden Erfindung eine undurchsichtige Folie, deren Lichtdurchlässigkeit (ASTM-D 1003-77) höchstens 50 %, vorzugsweise höchstens 70 %, beträgt. In der Regel haben feste Teilchen eine Mindestgröße von 1 µm, um zu einer effektiven, d. h. opak machenden Menge an Vakuolen zu führen. Im allgemeinen beträgt der mittlere Teilchendurchmesser der festen Teilchen 1 bis 6 µm, vorzugsweise 1,5 bis 5 µm. Der chemische Charakter der festen Teilchen spielt eine untergeordnete Rolle.

Übliche vakuoleniniziierende Füllstoffe der Basisschicht sind anorganische und/oder organische, mit Polypropylen unverträgliche Materialien wie Aluminiumoxid, Aluminiumsulfat, Bariumsulfat, Calciumcarbonat, Magnesiumcarbonat, Silicate wie Aluminiumsilicat (Kaolinton) und Magnesiumsilicat (Talkum) und Siliciumdioxid, worunter Calciumcarbonat und Siliciumdioxid bevorzugt eingesetzt werden. Als organische Füllstoffe kommen die üblicherweise verwendeten, mit dem Polymeren der Basisschicht unverträglichen Polymeren in Frage, insbesondere solche wie HDPE, Copolymere von cyclischen Olefinen wie Norbornen oder Tetracyclododecen mit Ethylen oder Propen (COC) wie in EP-A-0 623 463 beschrieben, Polyester, Polystyrole, Polyamide, halogenierte organische Polymere, wobei Polyester wie beispielsweise Polybutylenterephthalate und Cycloolefincopolymere bevorzugt sind. "Unverträgliche Materialien bzw. unverträgliche Polymere" im Sinne der vorliegenden Erfindung bedeutet, daß das Material bzw. das Polymere in der Folie als separates Teilchen bzw. als separate Phase vorliegt.

Bevorzugte Ausführungsformen der erfindungsgemäßen Folie enthalten im wesentlichen kein $TiO_2$, vorzugsweise kein Pigment, in der Basisschicht. "Im wesentlichen kein $TiO_2$" bedeutet im Sinne der Erfindung, daß die Basisschicht 0 bis 2 Gew.-% $TiO_2$, vorzugsweise 0 bis 1 Gew.-% $TiO_2$, bezogen auf das Gewicht der Basisschicht, enthalten kann. Derartige geringe Mengen können beispielsweise durch die Verarbeitung von Regenerat in die Basisschicht gelangen. Die bevorzugten Ausführungsformen ohne $TiO_2$ bzw. ohne Pigmente in der Basisschicht sind noch vorteilhafter, insbesondere kostengünstig, da für die Erzielung eines hohen Weißgrades weniger teures Pigment bzw. $TiO_2$ eingesetzt werden muß und das Flächengewicht der Folie niedrig bleibt.

Weiterhin kann die Basisschicht gegebenenfalls ein Kohlenwasserstoffharz enthalten, dessen Anteil 1 bis 30 Gew.-%, vorzugsweise 2 bis 10 Gew.-%, bezogen auf die Basisschicht, beträgt. Der Erweichungspunkt des Harzes liegt zwischen 100 und 180 °C (gemessen nach DIN 1995-U4, entspricht ASTM E-28), vorzugsweise zwischen 130 und 160 °C. Das mittlere Molekulargewicht $M_w$ der Kohlenwasserstoffharze liegt im allgemeinen in einem Bereich von 300 bis 8 000, vorzugsweise 400 bis 5 000, vorzugsweise 500 bis 2 000. Unter den zahlreichen Harzen sind niedrigmolekulare und die Kohlenwasserstoffharze bevorzugt, und zwar in Form der Erdölharze (Petroleumharze), Styrolharze, Cyclopentadienharze und Terpenharze (diese Harze sind in Ullmanns Encyklopädie der techn. Chemie, 4. Auflage, Band 12, Seiten 525 bis 555, beschrieben). Geeignete Erdölharze sind in zahlreichen Schriften beschrieben wie beispielsweise EP-A-0 180 087, auf die hier ausdrücklich Bezug genommen wird. Weiterhin kann die Basisschicht zusätzlich übliche Additive, vorzugsweise Stabilisatoren, Neutralisationsmittel und/oder Antistatika, in jeweils wirksamen Mengen enthalten.

Die erfindungsgemäße Folie wird auf mindestens einer Seite der Basisschicht, gegebenenfalls auf beiden Seiten, mit einer Zwischenschicht versehen, wobei beidseitige Zwischenschichten nach ihrem Aufbau (Polymer), ihrer Zusammensetzung (Additive) und ihrer Dicke gleich oder verschieden sein können.

Diese Zwischenschicht/en enthält/enthalten im wesentlichen Polypropylen oder Polypropylenmischungen und vakuoleniniziierende Füllstoffe und Pigmente und gegebenenfalls Additive in jeweils wirksamen Mengen. Im allgemeinen enthält die Zwischenschicht Polypropylen oder Polypropylenmischungen, wie sie vorstehend für die Kernschicht beschrieben wurden. Grundsätzlich können die Kernschicht und die Zwischenschicht/en aus gleichen oder verschiedenen Propylenpolymeren bzw. Mischungen aufgebaut sein. Die Schmelzflußindices der Polymeren für die Kern- und Zwischenschicht/en sollen vorzugsweise gleich groß sein. Gegebenenfalls kann der MFI der Zwischenschicht/en etwas höher liegen, wobei eine Differenz von 20 % nicht überschritten werden sollte. Im allgemeinen enthält die Zwischenschicht 50 bis 97 Gew.-%, vorzugsweise 60 bis 90 Gew.-%, Propylenpolymer.

In einer weiteren Ausführungsform werden die in der Zwischenschicht eingesetzten Propylenpolymeren durch den Zusatz von organischen Peroxiden in der gleichen Weise wie vorstehend für die Basisschicht beschrieben teilabgebaut. Der Abbaufaktor A des in der Zwischenschicht eingesetzten Propylenpolymeren liegt im Bereich von 3 bis 15, vorzugsweise 6 bis 10.

Als vakuoleniniziierende Füllstoffe der Zwischenschicht sind alle vorstehend für die Basisschicht beschrie-

benen vakuoleninizierenden Füllstoffe geeignet, wobei die vakuoleninizierenden Füllstoffe in der Basis- und Zwischenschicht gleich oder verschieden sein können. Im allgemeinen enthält die Zwischenschicht 1 bis 25 Gew.-%, vorzugsweise 5 bis 12 Gew.-%, insbesondere 6 bis 8 Gew.-%, vakuoleninizierende Füllstoffe, bezogen auf die Zwischenschicht. Es hat sich als besonders vorteilhaft erwiesen, den Füllstoffgehalt der Schichten in Gewichtsprozent so einzustellen, daß die Zwischenschicht mindestens 10 %, vorzugsweise 20 bis 90 %, insbesondere 30 bis 70 %, weniger vakuoleninizierende Füllstoffe enthält als die Basisschicht, wobei die Prozentangaben auf das Gewicht der Füllstoffe in der Basisschicht bezogen sind. Bei solchen Ausführungsformen wird die Deckkraft der eingesetzten Pigmente besonders effektiv ausgenutzt, d. h. man erhält trotz der vergleichsweise geringen Mengen an Pigment bzw. $TiO_2$ einen besonders hohen Weißgrad auf derjenigen Folienseite, welche die Zwischenschicht aufweist.

Erfindungsgemäß enthält die Zwischenschicht zusätzlich Pigmente. Von dem Begriff "Pigmente" werden im Sinne der vorliegenden Erfindung feste Teilchen umfaßt, welche ebenfalls wie die vakuoleniniziierenden festen Teilchen mit der Polymermatrix unverträglich sind, die aber kaum zur Vakuolenbildung beim Verstrecken führen. Die färbende Wirkung der Pigmente wird durch die Teilchen selbst verursacht. Der Begriff "Pigment" ist im allgemeinen an eine Teilchengröße von 0,01 bis maximal 1 μm gebunden und umfaßt sowohl sogenannte "Weißpigmente", welche die Folien weiß einfärben, als auch "Buntpigmente", welche der Folie eine bunte oder schwarze Farbe verleihen. Im allgemeinen liegt der mittlere Teilchendurchmesser der Pigmente im Bereich von 0,01 bis 1 μm, vorzugsweise 0,01 bis 0,5 μm.

Somit ist die Unterteilung der Füllstoffe in die beiden Gruppen "vakuoleniniziierende Teilchen" und "Pigmente" eine Klassifizierung nach ihrer Funktionalität, die u. a. von der Teilchengröße abhängig ist. Feste Teilchen machen Folien durch Vakuolenbildung opak. Pigmente färben die Folie und machen sie dadurch undurchsichtig.

Im allgemeinen enthält die Zwischenschicht Pigmente in einer Menge von mindestens 2 Gew.-%, vorzugsweise 5 bis 25 Gew.-%, insbesondere 8 bis 15 Gew.-%, bezogen auf das Gewicht der Zwischenschicht.

Bevorzugte Ausführungsformen der pigmentierten Zwischenschicht enthalten $TiO_2$ als Weißpigment. Die Titandioxidteilchen bestehen vorzugsweise zu mindestens 95 Gew.-% aus Rutil und können mit einem Überzug aus anorganischen Oxiden eingesetzt werden, wie er üblicherweise als Überzug für $TiO_2$-Weißpigment in Papieren oder Anstrichmitteln zur Verbesserung der Lichtechtheit verwendet wird. Zu den besonders geeigneten anorganischen Oxiden gehören die Oxide von Aluminium, Silicium, Zink oder Magnesium oder Mischungen aus zwei oder mehreren dieser Verbindungen. Sie werden aus wasserlöslichen Verbindungen, z. B. Alkali-, insbesondere Natriumaluminat, Aluminiumhydroxid, Aluminiumsulfat, Aluminiumnitrat, Natriumsilikat oder Kieselsäure, in der wäßrigen Suspension ausgefällt. $TiO_2$-Partikel mit einem Überzug werden z. B. in der EP-A-0 078 633 und EP-A-0 044 515 beschrieben.

Gegebenenfalls können die $TiO_2$-Teilchen einen Überzug aus organischen Verbindungen mit polaren und unpolaren Gruppen aufweisen. Bevorzugte organische Verbindungen sind Alkanole und Fettsäuren mit 8 bis 30 C-Atomen in der Alkylgruppe, insbesondere Fettsäuren und primäre n-Alkanole mit 12 bis 24 C-Atomen, sowie Polydiorganosiloxane und/oder Polyorganohydrogensiloxane wie Polydimethylsiloxan und Polymethylhydrogensiloxan.

Der Überzug auf den $TiO_2$-Teilchen besteht gewöhnlich aus 1 bis 12 g, insbesondere 2 bis 6 g, anorganischer Oxide, gegebenenfalls sind zusätzlich 0,5 bis 3 g, insbesondere 0,7 bis 1,5 g, organische Verbindungen, jeweils bezogen auf 100 g $TiO_2$-Teilchen, enthalten. Als besonders vorteilhaft hat es sich erwiesen, wenn die $TiO_2$-Teilchen mit $Al_2O_3$ oder mit $Al_2O_3$ und Polydimethylsiloxan beschichtet sind.

Gegebenenfalls enthält die Zwischenschicht zusätzlich ein Harz, dessen Anteil 1 bis 30 Gew.-%, vorzugsweise 2 bis 10 Gew.-%, bezogen auf die Zwischenschicht, beträgt. Als Kohlenwasserstoffe sind diejenigen Harze geeignet, welche vorstehend für die Basisschicht beschrieben wurden.

Neben den genannten Zusätzen kann die Zwischenschicht auch noch weitere übliche Additive enthalten, vorzugsweise Gleitmittel, Stabilisatoren, Antistatika und Neutralisationsmittel.

Die erfindungsgemäße Folie weist mindestens eine Deckschicht auf, welche auf der Zwischenschicht aufgebracht ist. Gegebenenfalls ist eine weitere Deckschicht vorhanden, welche entweder auf der Basisschicht oder auf der gegebenenfalls vorhandenen zweiten Zwischenschicht aufgebracht ist. Beidseitige Deckschichten können nach ihrem Aufbau, ihrer Zusammensetzung und ihrer Dicke gleich oder verschieden sein.

Die Deckschicht enthält im allgemeinen 75 bis 100 Gew.-%, insbesondere 90 bis 99,5 Gew.-%, siegelfähige Polymere aus Monomeren mit 2 bis 10 Kohlenstoffatomen, jeweils bezogen auf das Gewicht der Schicht, und gegebenenfalls Additive in jeweils wirksamen Mengen.

Unter siegelfähigen Polymeren werden im Sinne der vorliegenden Erfindung

    Copolymere von

        Ethylen und Propylen oder

        Ethylen und Butylen oder

        Propylen und Butylen oder

        Ethylen und einem anderen α-Olefin mit 5 bis 10

        Kohlenstoffatomen oder

        Propylen und einem anderen α-Olefin mit 5 bis 10

Kohlenstoffatomen oder

Terpolymere von

Ethylen und Propylen und Butylen oder

Ethylen und Propylen und einem anderen α-Olefin mit 5 bis 10

Kohlenstoffatomen oder

eine Mischung oder ein Blend aus zwei oder mehreren der genannten Cound/oder Terpolymeren verstanden.

Besonders bevorzugt enthält/enthalten die Deckschicht/en

ein Copolymeres von

Ethylen und Propylen oder

Ethylen und Butylen-1 oder

Propylen und Butylen-1 oder

ein Terpolymeres von

Ethylen und Propylen und Butylen-1 oder

eine Mischung oder ein Blend aus zwei oder mehreren der genannten besonders bevorzugten Co- und/oder Terpolymeren,

wobei insbesondere

statistische Ethylen-Propylen-Copolymere mit

einem Ethylengehalt von 2 bis 10 Gew.-%, bevorzugt 5 bis 8 Gew.-%, oder

statistische Propylen-Butylen-1-Copolymere mit

einem Butylengehalt von 4 bis 25 Gew.-%, bevorzugt 10 bis 20 Gew.-%,

jeweils bezogen auf das Gesamtgewicht des Copolymeren, oder statistische Ethylen-Propylen-Butylen-1-Terpolymere mit

einem Ethylengehalt von 1 bis 10 Gew.-%, bevorzugt 2 bis 6 Gew.-%, und

einem Butylen-1-Gehalt von 3 bis 20 Gew.-%, bevorzugt 8 bis 10 Gew.-%,

bezogen auf das Gesamtgewicht des Terpolymeren, oder

eine Mischung oder ein Blend von einem Ethylen-Propylen-Butylen-1-Terpolymeren und einem Propylen-Butylen-1-Copolymeren mit einem Ethylengehalt von 0,1 bis 7 Gew.-%

und einem Propylengehalt von 50 bis 90 Gew.-%

und einem Butylen-1-Gehalt von 10 bis 40 Gew.-%,

bezogen auf das Gesamtgewicht der Polymermischung,

bevorzugt sind.

Auch die vorstehend beschriebenen Deckschichtpolymeren können in analoger Weise wie vorne für die Basisschicht beschrieben peroxidisch abgebaut werden. Dabei werden grundsätzlich die gleichen Peroxide wie vorstehend beschrieben für den Abbau verwendet. Der Abbaufaktor A des/der Deckschichtpolymeren liegt im allgemeinen im Bereich von 3 bis 15, vorzugsweise 6 bis 10.

Als siegelfähige Polymere können grundsätzlich auch siegelfähige Homopolymere verwendet werden. Diese siegelfähigen Homopolymeren zeichnen sich durch eine besondere Struktur und völlig neue Eigenschaften gegenüber den herkömmlichen bekannten isotaktischen, nicht siegelfähigen Homopolymeren aus. Solche Materialien werden beschrieben in DE-A-42 28 812 und EP-A-0 484 816.

Zur Verbesserung der Hafteigenschaften der Deckschicht/en, beispielsweise gegenüber Druckfarben oder Metallschichten, ist mindestens eine Oberfläche der Folie corona- oder flammbehandelt, wobei gegebenenfalls die entsprechende Behandlung an beiden Oberflächen vorgenommen werden und gleich oder verschieden sein kann.

Um bestimmte Eigenschaften der erfindungsgemäßen Polyolefinfolie noch weiter zu verbessern, können sowohl die Basisschicht als auch die Zwischen- und Deckschicht/en weitere Zusätze in einer jeweils wirksamen Menge enthalten, vorzugsweise Antiblockmittel und/oder Gleitmittel und/oder Stabilisatoren und/oder Neutralisationsmittel, die mit den Propylenpolymeren der Basisschicht und der Deckschicht/en verträglich sind, mit Ausnahme der Antiblockmittel, die im allgemeinen unverträglich sind. Alle Mengenangaben in der folgenden Ausführung in Gewichtsprozent (Gew.-%) beziehen sich jeweils auf die Schicht oder Schichten, der oder denen das Additiv zugesetzt sein kann.

Geeignete Antiblockmittel sind anorganische Zusatzstoffe wie Siliciumdioxid, Calciumcarbonat, Magnesiumsilicat, Aluminiumsilicat, Calciumphosphat und dergleichen und/oder unverträgliche organische Polymerisate wie Polyamide, Polyester, Polycarbonate und dergleichen, bevorzugt werden Benzoguanaminformaldehyd-Polymere, Siliciumdioxid und Calciumcarbonat. Die wirksame Menge an Antiblockmittel liegt im Bereich von 0,1 bis 2 Gew.-%, vorzugsweise 0,1 bis 0,5 Gew.-%. Die mittlere Teilchengröße liegt zwischen 1 und 6 μm, insbesondere 2 und 5 μm, wobei Teilchen mit einer kugelförmigen Gestalt wie in der EP-A-0 236 945, der DE-A-38 01 535 und der deutschen Patentanmeldung P 44 26 185.3 beschrieben besonders geeignet sind. Bevorzugt werden die Antiblockmittel den Deckschichten zugesetzt.

Gleitmittel sind höhere aliphatische Säureamide, höhere aliphatische Säureester, Wachse und Metallseifen sowie Polydimethylsiloxane. Die wirksame Menge an Gleitmittel liegt im Bereich von 0,1 bis 3 Gew.-%. Besonders geeignet ist der Zusatz von höheren aliphatischen Säureamiden im Bereich von 0,15 bis 0,25 Gew.-% in der Basisschicht und/oder den Deckschichten. Ein insbesondere geeignetes aliphatisches Säureamid ist Erucasäureamid.

Der Zusatz von Polydimethylsiloxanen ist im Bereich von 0,3 bis 2,0 Gew.-% bevorzugt, insbesondere Polydimethylsiloxane mit einer Viskosität von 10 000 bis 1 000 000 mm$^2$/s. Besonders günstig ist der Zusatz der Polydimethylsiloxane in eine oder beide Deckschichten.

Als Stabilisatoren können die üblichen stabilisierend wirkenden Verbindungen für Ethylen-, Propylen- und andere α-Olefinpolymere eingesetzt werden. Deren Zusatzmenge liegt zwischen 0,05 und 2 Gew.-%. Besonders geeignet sind phenolische Stabilisatoren, Alkali-/Erdalkalistearate und/oder Alkali-/Erdalkalicarbonate. Phenolische Stabilisatoren werden in einer Menge von 0,1 bis 0,6 Gew.-%, insbesondere 0,15 bis 0,3 Gew.-%, und mit einer Molmasse von mehr als 500 g/mol bevorzugt. Pentaerythrityl-Tetrakis-3-(3,5-di-Tertiärbutyl-4-Hydroxyphenyl)-Propionat oder 1,3,5-Trimethyl-2,4,6-tris(3,5-di-Tertiärbutyl-4-Hydroxybenzyl)benzol sind besonders vorteilhaft.

Neutralisationsmittel sind vorzugsweise Calciumstearat und/oder Calciumcarbonat und/oder synthetisches Dihydrotalcit (SHYT) mit einer mittleren Teilchengröße von höchstens 0,7 μm, einer absoluten Teilchengröße von kleiner 10 μm und einer spezifischen Oberfläche von mindestens 40 m$^2$/g.

Die Erfindung betrifft weiterhin ein Verfahren zur Herstellung der erfindungsgemäßen Mehrschichtfolie nach dem an sich bekannten Coextrusionsverfahren. Im Rahmen dieses Verfahrens wird so vorgegangen, daß die den einzelnen Schichten der Folie entsprechenden Schmelzen durch eine Flachdüse coextrudiert werden, die so erhaltene Folie zur Verfestigung auf einer oder mehreren Walze/n abgezogen wird, die Folie anschließend biaxial gestreckt (orientiert), die biaxial gestreckte Folie thermofixiert und gegebenenfalls an der zur Coronabehandlung vorgesehenen Oberflächenschicht coronabehandelt wird.

Die biaxiale Streckung (Orientierung) wird im allgemeinen aufeinanderfolgend durchgeführt, wobei die aufeinanderfolgende biaxiale Streckung, bei der zuerst längs (in Maschinenrichtung) und dann quer (senkrecht zur Maschinenrichtung) gestreckt wird, bevorzugt ist.

Zunächst wird wie beim Coextrusionsverfahren üblich das Polymere bzw. die Polymermischung der einzelnen Schichten in einem Extruder komprimiert und verflüssigt, wobei die gegebenenfalls zugesetzten Additive bereits im Polymer bzw. in der Polymermischung enthalten sein können. Die Schmelzen werden dann gleichzeitig durch eine Flachdüse (Breitschlitzdüse) gepreßt, und die ausgepreßte mehrschichtige Folie wird auf einer oder mehreren Abzugswalzen abgezogen, wobei sie abkühlt und sich verfestigt.

Die so erhaltene Folie wird dann längs und quer zur Extrusionsrichtung gestreckt, was zu einer Orientierung der Molekülketten führt. In Längsrichtung wird vorzugsweise 4:1 bis 7:1 und in Querrichtung vorzugsweise 8:1 bis 11:1 gestreckt. Das Längsstrecken wird man zweckmäßigerweise mit Hilfe zweier entsprechend dem angestrebten Streckverhältnis verschieden schnellaufender Walzen durchführen und das Querstrecken mit Hilfe eines entsprechenden Kluppenrahmens.

An die biaxiale Streckung der Folie schließt sich ihre Thermofixierung (Wärmebehandlung) an, wobei die Folie etwa 0,5 bis 10 s lang bei einer Temperatur von 140 bis 160 °C gehalten wird. Anschließend wird die Folie in üblicher Weise mit einer Aufwickeleinrichtung aufgewickelt.

Es hat sich als besonders günstig erwiesen, die Abzugswalze oder -walzen, durch die die ausgepreßte Folie auch abgekühlt und verfestigt wird, durch einen Heiz- und Kühlkreislauf bei einer Temperatur von 10 bis 100 °C, vorzugsweise 20 bis 80 °C, zu halten.

Die Temperaturen, bei denen Längs- und Querstreckung durchgeführt werden, können in einem relativ großen Bereich variieren und richten sich nach der jeweiligen Zusammensetzung der Deckschichtmischung und nach den gewünschten Eigenschaften der Folie bzw. der Basisschicht wie z. B. Opazität, Weißgrad, Dicke, Dichte usw. Im allgemeinen wird die Längsstreckung vorzugsweise bei 120 bis 150 °C und die Querstreckung vorzugsweise bei 155 bis 190 °C durchgeführt.

Gegebenenfalls kann/können wie oben erwähnt nach der biaxialen Streckung eine oder beide Oberfläche/n der Folie nach einer der bekannten Methoden corona- oder flammbehandelt werden. Die Behandlungsintensität liegt im allgemeinen im Bereich von 37 bis 42 mN/m, vorzugsweise 39 bis 40 mN/m.

Bei der Coronabehandlung wird zweckmäßigerweise so vorgegangen, daß die Folie zwischen zwei als Elektroden dienenden Leiterelementen hindurchgeführt wird, wobei zwischen den Elektroden eine so hohe Spannung, meist Wechselspannung (etwa 10 bis 20 kV und 20 bis 40 kHz), angelegt ist, daß Sprüh- oder Coronaentladungen stattfinden können. Durch die Sprüh- oder Coronaentladung wird die Luft oberhalb der Folienoberfläche ionisiert und reagiert mit den Molekülen der Folienoberfläche, so daß polare Einlagerungen in der im wesentlichen unpolaren Polymermatrix entstehen.

Für eine Flammbehandlung mit polarisierter Flamme (vgl. US-A-4,622,237) wird eine elektrische Gleichspannung zwischen einem Brenner (negativer Pol) und einer Kühlwalze angelegt. Die Höhe der angelegten Spannung beträgt zwischen 500 und 3 000 V, vorzugsweise liegt sie im Bereich von 1 500 bis 2 000 V. Durch die angelegte Spannung erhalten die ionisierten Atome eine erhöhte Beschleunigung und treffen mit größerer kinetischer Energie auf die Polymeroberfläche. Die chemischen Bindungen innerhalb des Polymermoleküls werden leichter aufgebrochen, und die Radikalbildung geht schneller vonstatten. Die thermische Belastung des Polymeren ist hierbei weitaus geringer als bei der Standardflammbehandlung, und es können Folien erhalten werden, bei denen die Siegeleigenschaften der behandelten Seite sogar besser sind als diejenigen der nicht behandelten Seite.

Die Erfindung wird durch das nachfolgende Beispiel 1 näher erläutert:

Beispiel 1

Es wurde eine vierschichtige Folie (Aufbau der Schichten: AKZD) hergestellt, wobei folgende Produktionsparameter eingehalten wurden:

Es wurde eine vierschichtige Vorfolie mit einem asymmetrischen Schichtaufbau DKZD extrudiert. Diese Vorfolie wurde auf einer Kühlwalze (Temperatur der Kühlwalze: 30 °C) abgekühlt. Anschließend erfolgte die Streckung zunächst in Längs- ($\lambda_l$ = 5,5:1; T = 130 °C) und dann in Querrichtung ($\lambda_q$ = 9:1; T = 160 °C, Konvergenz: 15 %). Die Maschinengeschwindigkeit betrug ca. 210 m/min.

Die Folie hatte folgende Rezepturierung:

| Kernschicht K: | |
|---|---|
| 89,5 Gew.-% | Propylenhomopolymerisat mit einem Schmelzflußindex von 4 g/10 min (230 °C, 21,6 N) [®Eltex PHP 405] |
| 10,5 Gew.-% | Calciumcarbonat mit einem mittleren Teilchendurchmesser von 1,5 µm |

| Zwischenschicht Z: | |
|---|---|
| 86,5 Gew.-% | Propylenhomopolymerisat mit einem Schmelzflußindex von 4 g/10 min (230 °C; 21,6 N) [®Eltex PHP 405] |
| 8,5 Gew.-% | $TiO_2$ mit einem mittleren Teilchendurchmesser von 0,2 bis 0,3 µm |
| 5 Gew.-% | Calciumcarbonat mit einem mittleren Teilchendurchmesser von 1,5 µm |

Das Calciumcarbonat wurde für die Basis- und Zwischenschicht über ein Masterbatch (30 Gew.-% PP, 70 Gew.-% $CaCO_3$; ®Omyalite 90T, Fa. OMYA, Köln, DE) eingesetzt.

Das $TiO_2$ wurde über ein Masterbach (55 Gew.-% $TiO_2$; 45 Gew.-% PP; ®8555 LM; Fa. Schulman, Kerpen, DE) eingesetzt.

| Deckschichten D: | |
|---|---|
| 99,65 Gew.-% | Ethylen-Propylen-Copolymerisat mit einem $C_2$-Gehalt von 4 %, einem Schmelzflußindex von 12 g/10 min (230 °C, 21,6 N) und einem Abbaufaktor von 8 |
| 0,35 Gew.-% | $SiO_2$-Teilchen mit einem mittleren Teilchendurchmesser von 4 µm |

| | |
|---|---|
| Dicke der Folie | 47 µm |
| Dicke von Schicht K | 38 µm |
| Dicke von Schicht Z | 7 µm |
| Dicke der Deckschichten D | 1 µm |

Eine Deckschicht wurde mit 41 mN/m coronabehandelt. Die Folie hat die in der Tabelle genannten erfindungsgemäßen Eigenschaften.

Vergleichsbeispiel 1

Es wurde eine Vierschichtfolie gemäß Beispiel 1 hergestellt, wobei jedoch die Zwischenschicht kein $CaCO_3$ enthielt (91,5 Gew.-% Propylenhomopolymerisat und 8,5 Gew.-% $TiO_2$). Die Basisschicht enthielt 12 Gew.-% $CaCO_3$ und 88 Gew.-% Propylenhomopolymerisat wie unter Beispiel 1 beschrieben.

Vergleichsbeispiel 2

Es wurde eine Dreischichtfolie analog Beispiel 1 hergestellt. Die Deckschichten waren wie in Vergleichsbeispiel 1 rezepturiert. Die Basisschicht enthielt 81,5 Gew.-% Propylenpolymer, 6,5 Gew.-% $TiO_2$ und 12 Gew.-% $CaCO_3$.

Zur Charakterisierung der Rohstoffe und der Folien wurden die folgenden Meßmethoden benutzt:

Schmelzflußindex

Der Schmelzflußindex wurde in Anlehnung an DIN 53 735 bei 21,6 N Belastung und 230 °C gemessen.

Schmelzpunkt

DSC-Messung, Maximum der Schmelzkurve, Aufheizgeschwindigkeit 20 °C/min.

Dichte σ

Die Dichte wird nach DIN 53 479, Verfahren A, bestimmt.

Siegelnahtfestigkeit

Zur Bestimmung wurden zwei 15 mm breite Folienstreifen übereinandergelegt und bei 130 °C, einer Siegelzeit von 0,5 s und einem Siegeldruck von 10 N/cm² (Gerät: Brugger Typ NDS, einseitig beheizte Siegelbacke) versiegelt. Die Siegelnahtfestigkeit wurde nach der T-Peel-Methode bestimmt.

Oberflächenspannung

Die Oberflächenspannung wurde mittels der sogenannten Tintenmethode (DIN 53 364) bestimmt.

Opazität und Weißgrad

Die Bestimmung der Opazität und des Weißgrades erfolgt mit Hilfe des elektrischen Remissionsphotometers "ELREPHO" der Firma Zeiss, Oberkochem (DE), Normlichtart C, 2° Normalbeobachter. Die Opazität wird nach DIN 53 146 bestimmt. Der Weißgrad wird als WG = RY + 3RZ - 3RX definiert. WG = Weißgrad; RY, RZ, RX = entsprechende Reflexionsfaktoren bei Einsatz des Y-, Z- und X-Farbmeßfilters. Als Weißstandard wird ein Preßling aus Bariumsulfat (DIN 5033, Teil 9) verwendet. Eine ausführliche Beschreibung ist z. B. in Hansl Loos "Farbmessung", Verlag Beruf und Schule, Itzehoe (1989), beschrieben.

Spleißneigung

Zwei Folienlagen werden mit ihren nicht coronabehandelten Oberflächen mittels eines doppelseitigen Klebebandes aneinandergeklebt. Die Haftkraft des Klebebandes zur Folienoberfläche muß größer als die innere Festigkeit der Folie sein, so daß der Verbund beim Auseinanderziehen der beiden verklebten Folienlagen nicht in der Klebefläche, sondern einer der beiden Folienlagen aufreißt. Die Bestimmung der Spleißneigung erfolgt an 15 mm breiten Folienlagen analog der Bestimmung der Siegelnahtfestigkeit und ist die Kraft in mN, die erforderlich ist, um den Verbund aufzureißen.

In der nachstehenden Tabelle sind die Eigenschaften und der Aufbau der Polypropylen-Mehrschichtfolien des Beispiels zusammengefaßt.

TABELLE

| | | Beispiel | Vergleichsbeispiel 1 | Vergleichsbeispiel 2 |
|---|---|---|---|---|
| Flächengewicht | g/m² | 28,5 | 28,5 | 28,5 |
| Dicke | μm | 42 | 42 | 42 |
| Dichte | g/cm³ | 0,68 | 0,68 | 0,68 |
| $TiO_2$-Menge | g/m² | 0,54 | 0,54 | 1,74 |

TABELLE (fortgesetzt)

| | | Beispiel | Vergleichsbeispiel 1 | Vergleichsbeispiel 2 |
|---|---|---|---|---|
| TiO$_2$-Konzentration<br>* bezogen auf das Gesamtgewicht der Folie | Gew.-%* | 1,9 | 1,9 | 6,5 |
| Weißgrad (Berger) | % | 90 | 90 | 90 |
| Opazität | % | 91 | 91 | 91 |
| Spleißneigung | mN/15 mm | 1,8 | 1,3 | 1,6 |
| Biegesteifigkeit | µNm | 33 | 31 | 28 |

**Patentansprüche**

1. Siegelbare, weiße-opake biaxial orientierte Polypropylen-Mehrschichtfolie aus einer Kernschicht und mindestens einer darauf angeordneten Zwischenschicht und mindestens einer auf der Zwischenschicht angeordneten Deckschicht, **dadurch gekennzeichnet, daß** die Kernschicht 1 bis 15 Gew.-% vakuoleninitierende Teilchen, bezogen auf das Gewicht der Kernschicht enthält und die Zwischenschicht 1 bis 12 Gew.-% vakuoleninitierende Teilchen und mindestens 2 Gew.-% Pigment, jeweils bezogen auf das Gewicht der Zwischenschicht enthält und die Zwischenschicht mindestens 10% weniger vakuoleninitierende Teilchen enthält als die Kernschicht wobei die Prozentangabe auf das Gewicht der Fullstoffe in der kernschicht bezogen ist.

2. Mehrschichtfolie nach Anspruch 1, **dadurch gekennzeichnet, daß** die Basisschicht 5 bis 15 Gew.-%, vorzugsweise 6 bis 10 Gew.-%, vakuoleniniziierende Teilchen enthält und die Zwischenschicht 5 bis 12 Gew.-%, vorzugsweise 6 bis 8 Gew.-%, vakuoleniniziierende Teilchen und 5 bis 25 Gew.-%, vorzugsweise 8 bis 15 Gew.-%, Pigmente enthält.

3. Mehrschichtfolie nach einem oder mehreren der Ansprüche 1 bis 2, **dadurch gekennzeichnet, daß** die Zwischenschicht 2 bis 20 µm, vorzugsweise 3 bis 15 µm, und die Deckschicht 0,3 bis 5 µm, vorzugsweise 0,4 bis 3 µm, dick ist.

4. Mehrschichtfolie nach einem oder mehreren der Ansprüche 1 bis 3, **dadurch gekennzeichnet, daß** die Folie eine Dichte im Bereich von 0,5 bis 0,84 g/cm$^3$, vorzugsweise 0,55 bis 0,75 g/cm$^3$, aufweist.

5. Mehrschichtfolie nach einem oder mehreren der Ansprüche 1 bis 4, **dadurch gekennzeichnet, daß** die vakuoleniniziierenden Teilchen einen mittleren Teilchendurchmesser von 1 bis 6 µm und die Pigmente einen mittleren Teilchendurchmesser von 0,01 bis 1 µm haben.

6. Mehrschichtfolie nach einem oder mehreren der Ansprüche 1 bis 5, **dadurch gekennzeichnet, daß** die vakuoleniniziierenden Teilchen Calciumcarbonat oder Siliciumdioxid oder unverträgliche Polymere und die Pigmente TiO$_2$ sind.

7. Mehrschichtfolie nach einem oder mehreren der Ansprüche 1 bis 6, **dadurch gekennzeichnet, daß** die Basisschicht 0 bis 2 Gew.-%, vorzugsweise 0 bis 1 Gew.-%, TiO$_2$ enthält, bezogen auf das Gewicht der Basisschicht.

8. Verwendung einer Mehrschichtfolie nach Anspruch 1 als Verpackungsfolie, zur Bedruckung, zur Metallisierung oder zur Laminierung mit weiteren Substraten.

9. Verfahren zur Herstellung einer Polypropylenfolie nach einem oder mehreren der Ansprüche 1 bis 7, **dadurch gekennzeichnet, daß** die Polymeren der einzelnen Schichten in einem Extruder erwärmt, komprimiert und aufgeschmolzen werden, die den einzelnen Schichten der Folie entsprechenden Schmelzen gemeinsam und gleichzeitig durch eine Flachdüse extrudiert werden, und die so erhaltene Folie auf einer Abzugswalze abgezogen wird, wobei sie sich abkühlt und verfestigt und die so erhaltene Vorfolie längs und quer orientiert wird, wobei die Orientierung in Längsrichtung mit einem Längsstreckverhältnis von 4:1 bis 7:1 und in Querrichtung mit einem Querstreckverhältnis von 8:1 bis 11:1 erfolgt.

**Claims**

1. Heat-sealable, white, opaque, biaxially oriented multilayer polypropylene film comprising a core layer and at least one interlayer arranged thereon and at least one top layer arranged on the interlayer, **characterized in that** the core layer comprises from 1 to 15% by weight of vacuole-initiating particles, based on the weight of the core layer, and the interlayer comprises from 1 to 12% by weight of vacuole-initiating particles and at least 2% by weight of pigment, in each case based on the weight of the interlayer, and the interlayer comprises at least 10% less vacuole-initiating particles than the core layer, where the percentage is based on the weight of the fillers in the core layer.

2. Multilayer film according to Claim 1, **characterized in that** the core layer comprises from 5 to 15% by weight, preferably from 6 to 10% by weight, of vacuole-initiating particles, and the interlayer comprises from 5 to 12% by weight, preferably from 6 to 8% by weight, of vacuole-initiating particles and from 5 to 25% by weight, preferably from 8 to 15% by weight, of pigments.

3. Multilayer film according to Claim 1 and/or 2, **characterized in that** the interlayer has a thickness of from 2 to 20 μm, preferably from 3 to 15 μm, and the top layer has a thickness of from 0.3 to 5 μm, preferably from 0.4 to 3 μm.

4. Multilayer film according to one or more of Claims 1 to 3, **characterized in that** the film has a density in the range from 0.5 to 0.84 $g/cm^3$, preferably from 0.55 to 0.75 $g/cm^3$.

5. Multilayer film according to one or more of Claims 1 to 4, **characterized in that** the vacuole-initiating particles have a mean particle diameter of from 1 to 6 μm, and the pigments have a mean particle diameter of from 0.01 to 1 μm.

6. Multilayer film according to one or more of Claims 1 to 5, **characterized in that** the vacuole-initiating particles are calcium carbonate or silicon dioxide or incompatible polymers, and the pigments are $TiO_2$.

7. Multilayer film according to one or more of Claims 1 to 6, **characterized in that** the core layer comprises from 0 to 2% by weight, preferably from 0 to 1% by weight, of $TiO_2$, based on the weight of the core layer.

8. Use of a multilayer film according to Claim 1 as packaging film, for printing, for metallization or for lamination with further substrates.

9. Process for the production of a polypropylene film according to one or more of Claims 1 to 7, **characterized in that** the polymers of the individual layers are warmed, compressed and melted in an extruder, the melts corresponding to the individual layers of the film are extruded jointly and simultaneously through a flat-film die, and the resultant film is taken off on a take-off roll, during which it cools and solidifies, and the resultant pre-film is oriented longitudinally and transversely, with the orientation in the longitudinal direction taking place with a longitudinal stretching ratio of from 4:1 to 7:1 and the orientation in the transverse direction taking place with a transverse stretching ratio of from 8:1 to 11:1.

**Revendications**

1. Film multicouches de polypropylène scellable blanc opaque biaxialement orienté consistant en une couche centrale avec au moins une couche intermédiaire disposée dessus et au moins une couche de surface disposée sur la couche intermédiaire, **caractérisé en ce que** la couche centrale contient 1 à 15 % en poids de particules initiant des vacuoles, rapporté au poids de la couche centrale et la couche intermédiaire contient 1 à 12 % en poids de particules initiant des vacuoles et au moins 2 % en poids de pigment, rapportés respectivement au poids de la couche intermédiaire et la couche intermédiaire contient au moins 10 % de moins de particules initiant des vacuoles que la couche centrale, l'indication en pour cents se rapportant au poids des matières de charge dans la couche centrale.

2. Film multicouches selon la revendication 1, **caractérisé en ce que** la couche centrale contient 5 à 15 % en poids, de préférence 6 à 10 % en poids de particules initiant des vacuoles et la couche intermédiaire contient 5 à 12 % en poids, de préférence 6 à 8 % en poids de particules initiant des vacuoles et 5 à 25 % en poids, de préférence 8 à 15 % en poids de pigments.

3. Film multicouches selon la revendication 1 et/ou 2, **caractérisé en ce que** la couche intermédiaire a une épaisseur de 2 à 20 μm, de préférence de 3 à 15 μm, et la couche de surface de 0,3 à 5 μm, de préférence de 0,4 à 3 μm.

4. Film multicouches selon l'une ou plusieurs des revendications 1 à 3, **caractérisé en ce que** le film présente une masse volumique dans une zone de 0,5 à 0,84 g/cm$^3$, de préférence de 0,55 à 0,75 g/cm$^3$.

5. Film multicouches selon l'une ou plusieurs des revendications 1 à 4, **caractérisé en ce que** les particules initiant des vacuoles ont un diamètre de particule moyen de 1 à 6 μm et les pigments un diamètre de particule moyen de 0,01 à 1 μm.

6. Film multicouches selon l'une ou plusieurs des revendications 1 à 5, **caractérisé en ce que** les particules initiant les vacuoles sont du carbonate de calcium ou du dioxyde de silicium ou des polymères incompatibles et les pigments sont du $TiO_2$.

7. Film multicouches selon l'une ou plusieurs des revendications 1 à 6, **caractérisé en ce que** la couche centrale contient 0 à 2 % en poids, de préférence 0 à 1 % en poids de $TiO_2$, rapporté au poids de la couche centrale.

8. Utilisation d'un film multicouches selon la revendication 1, en tant que film d'emballage destiné à l'impression, à la métallisation ou au contre-collage avec d'autres substrats.

9. Procédé destiné à la fabrication d'un film de polypropylène selon l'une ou plusieurs des revendications 1 à 7, **caractérisé en ce que** les polymères des différentes couches sont chauffés, comprimés et fondus dans une extrudeuse, les matières fondues correspondant aux différentes couches du film sont extrudées ensemble et en même temps à travers une filière plate, et le film ainsi obtenu est débité sur un rouleau débiteur tout en se refroidissant et en se solidifiant et le préfilm ainsi obtenu est orienté dans le sens longitudinal et transversal, l'orientation dans le sens longitudinal se faisant dans un rapport d'étirage longitudinal de 4 à 1 jusqu'à 7 à 1 et dans le sens transversal dans un rapport d'étirage transversal de 8 à 1 jusqu'à 11 à 1.